(19) **Europäisches Patentamt / European Patent Office / Office européen des brevets**

(11) **EP 4 521 341 A1**

(12) **EUROPEAN PATENT APPLICATION**

(43) Date of publication:
12.03.2025 Bulletin 2025/11

(21) Application number: 24198593.6

(22) Date of filing: 05.09.2024

(51) International Patent Classification (IPC):
*G06T 7/11* (2017.01)

(52) Cooperative Patent Classification (CPC):
**G06T 7/11;** G06T 2207/10081; G06T 2207/10088;
G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 06.09.2023 US 202363536730 P

(71) Applicant: **Stryker Corporation**
**Portage, MI 49002-9711 (US)**

(72) Inventors:
• **XIE, Weiyi**
**6663AG Lent (NL)**
• **WILLEMS, Nathalie**
**1053DP Amsterdam (NL)**
• **PATIL, Shubham**
**Palo Alto, 94306 (US)**
• **LI, Yang**
**Bothell, 98012 (US)**
• **KUMAR, Mayank**
**Sunnyvale, 94086 (US)**

(74) Representative: **Röthinger, Rainer**
**Wuesthoff & Wuesthoff**
**Patentanwälte und Rechtsanwalt PartG mbB**
**Schweigerstrasse 2**
**81541 München (DE)**

(54) **TECHNIQUES FOR ANATOMICAL SEGMENTATION OF MEDICAL IMAGES**

(57) Systems, computer-implemented methods, non-transitory computer readable media (computer program products), and techniques for segmenting an input medical image. An image encoder receives the input medical image (MI) and extracts image embeddings (IE) from the input medical image (MI). The image encoder receives a set of few-shot images (FIS) and computes target embeddings (TE) from the set of few-shot images (FIS). A mask decoder receives and associates the image embeddings (IE) and the target embeddings (TE) to output a predicted segmentation mask (SM) for the input medical image (IM).

**FIG. 2**

## Description

## CROSS-REFERENCE TO RELATED APPLICATIONS

The subject application claims priority to and all the benefits of US Provisional Patent App. No. 63/536,730, filed September 6, 2023, the entire contents of which are hereby incorporated by reference.

## BACKGROUND

Medical imaging such as CT, MRI, and X-Ray, etc. are the most effective technique for in vivo analysis of diverse human anatomical structures. However, visual assessment of anatomical structures, even by experts, can introduce subjectivity, errors, and significant delays. Therefore, a growing interest is in leveraging computational approaches to automatically analyze medical images. In this regard, automated anatomical segmentation methods have become essential, enabling precise identification and delineation of regions of interest (ROI) before deriving clinical measures.

Current automated segmentation techniques have made significant strides over traditional manual segmentation methods. However, current techniques for automated segmentation of medical images rely on task-specific neural networks tailored to predefined anatomical targets. Such models struggle to generalize when encountering unfamiliar or diseased anatomies. Consequently, practitioners often face the need to develop new models with a new round of data collection and labeling, which is particularly expensive for large volumetric medical datasets such as CT and MRI.

## SUMMARY

This Summary introduces a selection of concepts in a simplified form that are further described below in the Detailed Description below. This Summary is not intended to limit the scope of the claimed subject matter nor identify key features or essential features of the claimed subject matter.

According to a first aspect, a system is provided which is configured to segment an input medical image, the system comprising: an image encoder configured to: receive the input medical image; extract image embeddings from the input medical image; receive a set of few-shot images; and compute target embeddings from the set of few-shot images; and a mask decoder configured to: receive the image embeddings and the target embeddings as an input; and associate the image embeddings and the target embeddings to output a predicted segmentation mask for the input medical image.

In all the aspects, examples and embodiments presented herein, associating the image embedding and the target embeddings to output the predicted segmentation mask for the input medical device can be performed in different ways. As an example, the image embeddings may be mapped to the target embeddings (or vice versa). In other words, an association may be performed by mapping.

According to a second aspect, a non-transitory computer-readable medium (or computer program product) is provided, comprising instructions, which when executed by one or more processors, are configured to segment an input medical image by being configured to: receive the input medical image with an image encoder; extract image embeddings from the input medical image with the image encoder; receive a set of few-shot images with the image encoder; compute target embeddings from the set of few-shot images with the image encoder; input the image embeddings and the target embeddings to a mask decoder; and associate the image embeddings and the target embeddings, with the mask decoder, to output a predicted segmentation mask for the input medical image.

According to a third aspect, a computer-implemented method is provided for segmenting an input medical image, the computer-implemented method comprising: receiving the input medical image with an image encoder; extracting image embeddings from the input medical image with the image encoder; receiving a set of few-shot images with the image encoder; computing target embeddings from the set of few-shot images with the image encoder; inputting the image embeddings and the target embeddings to a mask decoder; and associating the image embeddings and the target embeddings, with the mask decoder, for outputting a predicted segmentation mask for the input medical image.

According to a fourth aspect, a system, an image processing system, or a non-transitory computer readable medium (or computer program product) is provided for segmenting an input medical image by being configured to: extract image embeddings from the input medical image; compute target embeddings from a set of few-shot images; and associate the image embeddings and the target embeddings to output a predicted segmentation for the input medical image.

According to a fifth aspect, a method is provided for segmenting an input medical image by extracting image embeddings from the input medical image; computing target embeddings from a set of few-shot images; and associating the image embeddings and the target embeddings for outputting a predicted segmentation for the input medical image.

According a sixth aspect, a system, an image processing system, or a non-transitory computer readable medium (or computer program product) is provided for segmenting an input medical image by being configured to: extract image embeddings from the input medical image; compute target embeddings from a set of few-shot images; and utilize the target embeddings as prompts to query anatomical objects captured in the image embeddings to output a predicted segmentation for the input medical image.

According to a seventh aspect, a method is provided for segmenting an input medical image by: extracting image embeddings from the input medical image; computing target embeddings from a set of few-shot images; and utilizing the target embeddings as prompts for querying anatomical objects captured in the image embeddings and for outputting a predicted segmentation for the input medical image.

According to an eighth aspect, a mask decoder is provided for use in segmenting an input medical image, the mask decoder comprising: a two-way transformer configured to: receive image embeddings derived from the input medical image; receive target embeddings derived from a set of few-shot images; and associate the image embeddings and the target embeddings to output a predicted segmentation for the input medical image.

According to a ninth aspect, a method of utilizing a mask decoder for segmenting an input medical image is provided, comprising: receiving image embeddings derived from the input medical image; receiving target embeddings derived from a set of few-shot images; and associating the image embeddings and the target embeddings to output a predicted segmentation for the input medical image.

According to a tenth aspect, a method of utilizing an adaptation of the segment anything model (SAM) is provided which is fine-tuned for segmenting medical images by utilizing target embeddings derived from a N-shot labeled images to query image embeddings of the medical images instead of utilizing user prompts or a prompt encoder input.

According to an eleventh aspect, a computer-implemented method is provided for segmenting an input medical image, the computer-implemented method comprising: receiving image embeddings derived from the input medical image; receiving target embeddings derived from a set of few-shot images; labeling each image of the set of few-shot images for a specific anatomical segmentation task; and associating the image embeddings and the target embeddings to output a predicted segmentation for the input medical image.

Also provided are: non-transitory computer readable medium, or computer program products comprising instructions, which when executed by one or more processors, are configured to implement any of the above aspects; surgical systems or devices comprising one or more controllers configured to implement any of the above aspects; computer-implemented methods of implementing any of the above aspects; image processors configured to implement any of the above aspects, and the like.

Any of the above aspects may be combined in whole or in part.

Any of the above aspects may be combined in whole or in part with any of the following implementations:

The few-shot images can relate to one type of anatomical body part or can relate to many types of anatomical body parts. The few-shot images can be of an anatomical joint, such as the knee, shoulder, hip, ankle, spine, etc. The few-shot images can be of any one or more bones, such as the femur, tibia, acetabulum, spine, scapula, humerus, cranium, etc. The few-shot images can be of any organ or soft tissue, such as ligaments, tendons, patella, the heart, the lungs, the colon, the brain, etc. Each image of the set of few-shot images can comprise a label. The label can be for a specific segmentation task. The segmentation task can be anatomically specific. The image encoder can compute or extract each target embedding based on, at least in part, the label. The mask decoder can propagate the label from the target embeddings to the image embeddings. The labeling can occur offline and can be performed manually or using an automated or semi-automated approach. Labeling can include pixel labeling, voxel labeling, color labeling, intensity labeling, and/or labeling what the image/object relates to. The mask decoder can utilize the target embeddings as prompts, for example, to query objects captured in the image embeddings, such as anatomical objects. In response to utilization of the target embeddings as prompts to query anatomical objects captured in the image embeddings, the mask decoder can retrieve and transform information stored in the image embeddings, for example, to output the predicted segmentation for the input medical image. The predicted segmentation mask for the input medical image can include a foreground mask and a background mask. The predicted segmentation can be a mask, an overlay, a superimposition, or an outline and can be provided on the original medical image or provided on a separate output image. The mask decoder can utilize the target embeddings as prompts to query anatomical objects captured in the image embeddings by being configured to query a foreground mask and a background mask. The image encoder can concatenate the target embeddings with query tokens prior to the target embeddings being input to the mask decoder. The mask decoder can reshape the target embeddings and query tokens into a dimension of the image embeddings. The mask decoder can include a first artificial neural network, for example, which can be trained using the target embeddings and image embeddings, or only using the target embeddings. A cache mechanism can store the image embeddings and/or target embeddings. The first artificial neural network of the mask decoder can be trained by retrieving the image embeddings and/or target embeddings from the cache mechanism. The mask decoder can comprise a transformer, such as a two-way transformer. The mask decoder or transformer can receive the image embeddings and the target embeddings as the input and associate (e.g., map) the image embeddings and the target embeddings. The transformer can include the first artificial neural network, or a second artificial neural network. The transformer is configured to utilize cross-attention mapping and the artificial neural network to associate the image embeddings to the target embeddings. The set of few-shot images can include or be limited to 50 or less images, 20 or less images, or 5 or less images. The input medical image can be a CT image, MRI image, X-ray image, or any other image modality. The input medical image can be 2D or 3D or combinations thereof. Any of the steps or functions described in the above implementations are configured to be performed automatically by the system or method.

Any of the above implementations can be combined in part or in whole.

## BRIEF DESCRIPTION OF THE DRAWINGS

Advantages of the present invention will be readily appreciated as the same becomes better understood by reference to the following detailed description when considered in connection with the accompanying drawings.

Figure 1 illustrates two cases using SAM point prompting on medical images, as experimented by the inventors.

Figure 2 is an example block diagram of a system for segmenting medical images according to one implementation.

Figure 3 is an example flow chart of a method for segmenting medical images according to one implementation.

Figure 4 is an example architecture of the system for segmenting medical images according to one implementation.

Figure 5 is a table of example datasets for anatomical segmentation on CT or MRI images utilized during experimentation performed by the inventors.

Figure 6 is table demonstrating quantitative results of anatomical segmentation methods on various anatomies, as derived during experimentation performed by the inventors.

Figure 7 is diagram comparing qualitative results of the segmentation methods of Figure 6, as derived during experimentation performed by the inventors.

## DETAILED DESCRIPTION

1. Investigating the Use of a Segment Anything Model (SAM) to Medical Imaging Segmentation

Segment Anything model (SAM) is a promptable segmentation system with zero-shot generalization to unfamiliar objects and images, without the need for additional training. Using an extensive dataset comprising over one billion masks, SAM demonstrates impressive zero-shot proficiency in generating precise object masks for unseen tasks. SAM provides versatile options for prompting: bounding boxes, points, masks, or texts. With these prompting methods, SAM promises to obviate the requirement for task-specific data to fine-tune and retrain new models when applied to a novel task.

The inventors have investigated the use of SAM to medical image segmentation and have discovered several shortcomings and aspects requiring technical improvement. For example, prompting may pose challenges when adapting SAM for segmenting volumetric medical images such as CT or MRI. First, SAM is inherently a 2D model. For segmenting large 3D volumetric scans, annotating regions by adding points or boxes slice by slice is still time consuming. The inventors have discovered that point-only prompting yields subpar performance when segmenting typical anatomies in CT and MRI images. Achieving good zero-shot performance requires accurate bounding boxes on each object region or sub-regions, substantially increasing the prompting efforts. Prompting is even more challenging when anatomical structures exhibit considerable shape variation or are distributed in multiple disconnected areas in 2D cross-section views. Second, SAM's ability to segment anything inherently leads to ambiguous predictions, particularly when anatomical structures appear closely layered in 2D views.

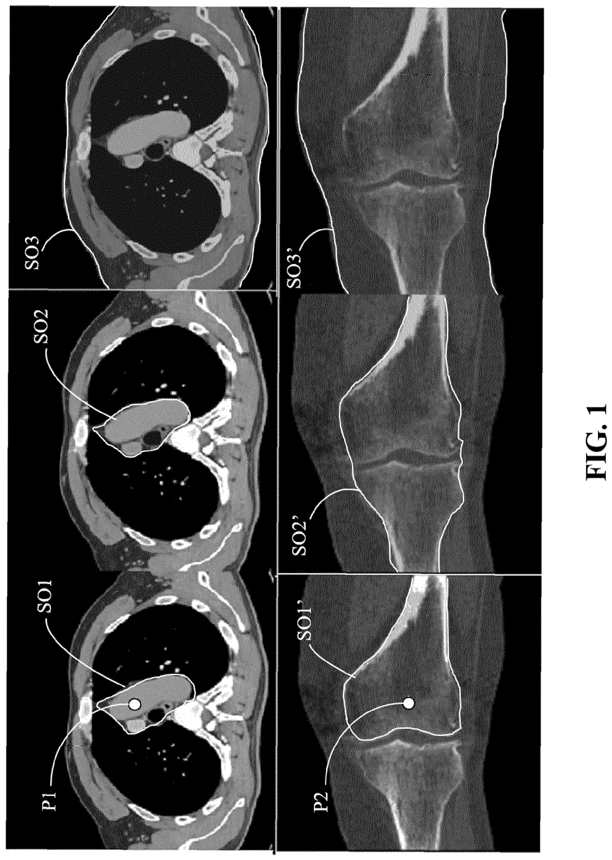

Figure 1 illustrates two cases using SAM point prompting. The top row illustrates an axial slice from a chest CT scan with a segmented aorta. The bottom row illustrates a coronal slice of a CT image with a segmented femur. The prompted points for the chest and femur slices are marked as P1, P2, respectively. The segmentation output for the chest slice is labeled as SO1, SO2, SO3 and the segmentation output for the femur slice is labeled as SO1', SO2', SO3'. In each case, three segmentation predictions from SAM are shown, with predicted IoU and stability score above the default thresholds (0.88 and 0.95, respectively).

As illustrated in Figure 1, relying solely on a single point prompt is insufficient for accurately segmenting the aorta (top) and knee joints (bottom) in CT images. Even with the inclusion of bounding boxes as prompts, accurately distinguishing the aorta from surrounding arteries remains challenging because the box would cover all anatomies nearby. In this case, one has to provide multiple points, and one marked as foreground and others as background to exclude surrounding objects. This increases the prompting efforts dramatically. Finally, in addition to providing three segmentation predictions, SAM incorporates two estimations, namely Intersection Over Union (IoU) and stability score, to assist users in evaluating the reliability of the predictions.

However, these measurements may not be sufficient for users to determine which segmentation to select confidently for end-application. This limitation is evident in two examples illustrated in Figure 1, where the far-right column depicts the segmentation predictions with the highest predicted IoUs and stability scores. In these examples, it is observed that the predictions with the highest scores tend to correspond to segments that are relatively easier to delineate, often achievable through simple intensity thresholding. Consequently, relying solely on the IoU and stability scores may lead to sub-optimal segmentation. To ensure accurate results, precise prompting, and careful selection among three predictions become crucial, requiring users to participate.

Since the introduction of SAM, several recent studies have investigated its performance in medical image segmentation benchmarks, specifically comparing various prompting options. Most of these studies suggest that using bounding boxes as prompts generally leads to improved performance compared to using points alone, though this finding is inconsistent depending on the dataset.

In adapting SAM for medical image segmentation, one prior technique performs a modification to SAM's mask decoder using a carefully curated medical image dataset comprising over 200,000 masks from 11 different modalities. Notably, this prior process focuses solely on the mask decoder while keeping the remaining components of SAM intact. However, the effectiveness of this prior technique has not been validated against fully supervised methods. Additionally, the training effort required, including data collection and computation time, poses practical challenges in adopting this prior approach.

A second prior approach modifies SAM by introducing a set of adaptor neural network modules connected through the original SAM network modules. During training, the SAM modules remain unchanged, while the parameters of the adaptor modules are updated to focus on segmenting medical images. However, the training process of this second technique still entails a non-trivial cost. Additionally, a relatively large data collection is needed for finetuning.

Accordingly, most of the existing approaches adapting SAM for medical images are still prompting-based methods, requiring users to provide accurate prompts during the use of the algorithms that may not be ideal for large volumetric medical images.

2. Fine-Tuning the Segment Anything Model (SAM) for Anatomical Segmentation In Medical Imaging

The inventors have discovered a methodology to fine-tune SAM to greatly improve the automated medical image segmentation output. Accordingly, described herein are systems, computer-implemented methods, software programs, non-transitory computer readable media and/or techniques for automatically segmenting medical imaging data using a fine-tuned Segment Anything Model (SAM).

More specifically, described herein is a highly effective "few-shot" fine-tuning strategy for adapting SAM to anatomical segmentation tasks in medical images. The techniques described herein revolve around reformulating the mask decoder (DEC) within SAM, leveraging few-shot embeddings derived from a limited set of labeled images (few-shot collection) as prompts for querying anatomical objects captured in image embeddings. This innovative reformulation greatly reduces the need for time-consuming online user interactions for labeling volumetric images, such as exhaustively marking points and bounding boxes to provide prompts slice by slice. With the techniques described herein, a few 2D or 3D images can be manually or automatically segmented and/or labeled and/or annotated offline, and the embeddings of these annotated image regions serve as effective prompts for online segmentation tasks. Alternatively, segmenting and/or labeling and/or annotating of the images can be performed online. The described method prioritizes the efficiency of the fine-tuning process by training the mask decoder (DEC) through caching mechanisms.

The few-shot images can relate to any suitable anatomical body part or parts. For example, the few-shot images can relate to an anatomical joint, such as the knee, shoulder, hip, ankle, spine, etc. The few-shot images can relate to any one or more bones, such as the femur, tibia, acetabulum, spine, scapula, humerus, cranium, etc. The few-shot images can be of any organ or soft tissue, such as ligaments, tendons, tumors, nerves, the patella, the heart, the lungs, the colon, the brain, etc.

Described herein is a few-shot fine-tuning strategy for adapting SAM to segment anatomical structures in medical images. The methodology described herein need not require introducing new network architectures or models. A primary modification lies in reformulating the mask decoder (DEC), which is adapted to accept few-shot embeddings as prompts, eliminating positional-encoded points, bounding boxes, or dense prompts such as masks and their corresponding prompt encoders. The fine-tuning process focuses on training the mask decoder (DEC) on a small set of labeled images specific to the segmentation task. The proposed fine-tuning process is computationally efficient compared to training standalone neural networks.

In contrast to the prior techniques, the proposed approach maintains the integrity of SAM's image encoder while focusing on fine-tuning the mask decoder (DEC) using a minimal amount (5-20) of labeled images specific to the given segmentation task. The described approach significantly reduces the training effort required and provides a practical solution for adapting SAM to medical image segmentation.

2.1 Methodology

In this section, the SAM methodology is first described before introducing the proposed few-shot fine-tuning strategy.

2.1.1. Segment Anything

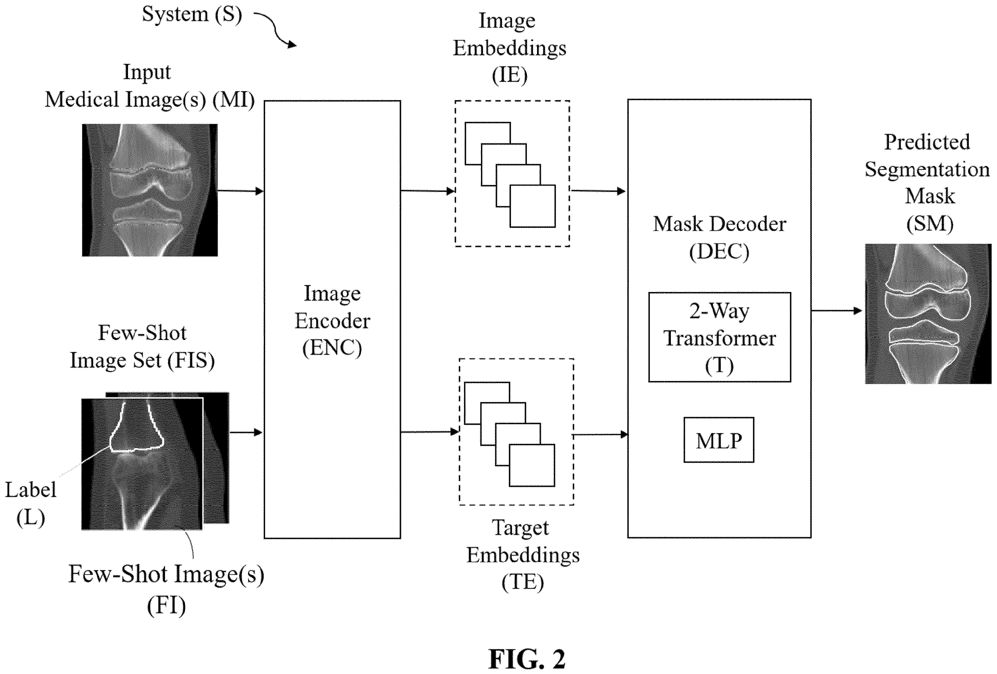

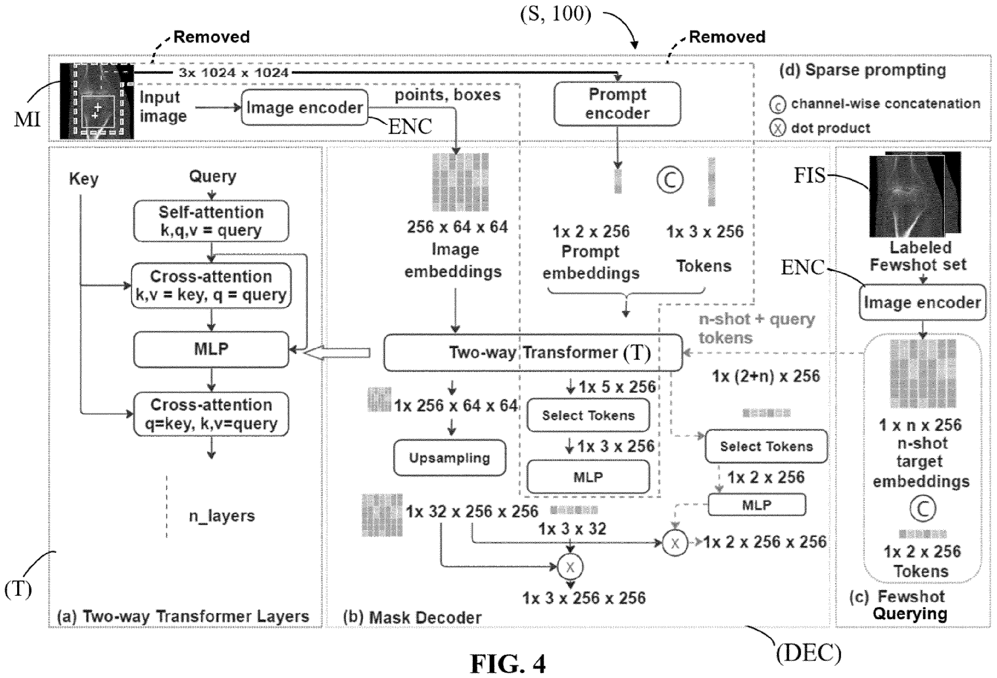

SAM can take a 2D image with dimensions of $1024 \times 1024$ and RGB channels as input. The first step of SAM is to utilize its image encoder, a vision transformer, to extract image embeddings from the input image. The resulting image embeddings are obtained at a down-sampled resolution of 64 × 64. SAM incorporates user input prompts, including points, bounding boxes, and masks, and encodes objects and their positional information into prompt embeddings to identify and locate objects within the image. These prompt embeddings serve as queries for the mask decoder (DEC), which is based on MaskFormers. The mask decoder (DEC) (illustrated in Figures 2 and 4) employs attention mechanisms to capture the correlations between the queries (prompt embeddings with tokens) and keys (image embeddings with encoded positional information). This enables the retrieval of relevant information stored in the image embeddings (values). The mask decoder (DEC) comprises multiple layers of two-way transformers, as depicted in Figure 4 (a). These transformers incorporate self-attention and cross-attention layers, allowing both the image and prompt embeddings to attend to each other's information.

### 2.1.2. Prompting with SAM

SAM offers two modes: automatic mode and prompting mode. In automatic mode, users do not need to provide any input. The algorithm generates a grid of uniformly distributed points on the input image, which serve as prompts for segmentation. The auto-segmentation mode is not suitable for anatomical segmentation tasks as it lacks alignment with anatomical entities and shall segment anything in the image.

A more targeted approach is to use the prompting mode, which allows users to interact with the algorithm by providing various types of prompts such as points, bounding boxes, and masks to indicate the location of the target objects. In point prompting, users can provide multiple points to indicate the foreground and background areas. An alternative is to provide bounding boxes as prompts. Users can specify the coordinates of the top-left and bottom-right corners of the bounding boxes to indicate the regions of interest. The inventors have discovered that this approach has shown to yield improved results when adapting SAM for medical image segmentation over using points prompting.

### 2.1.3. Few-Shot Fine-tuning for SAM Adaption

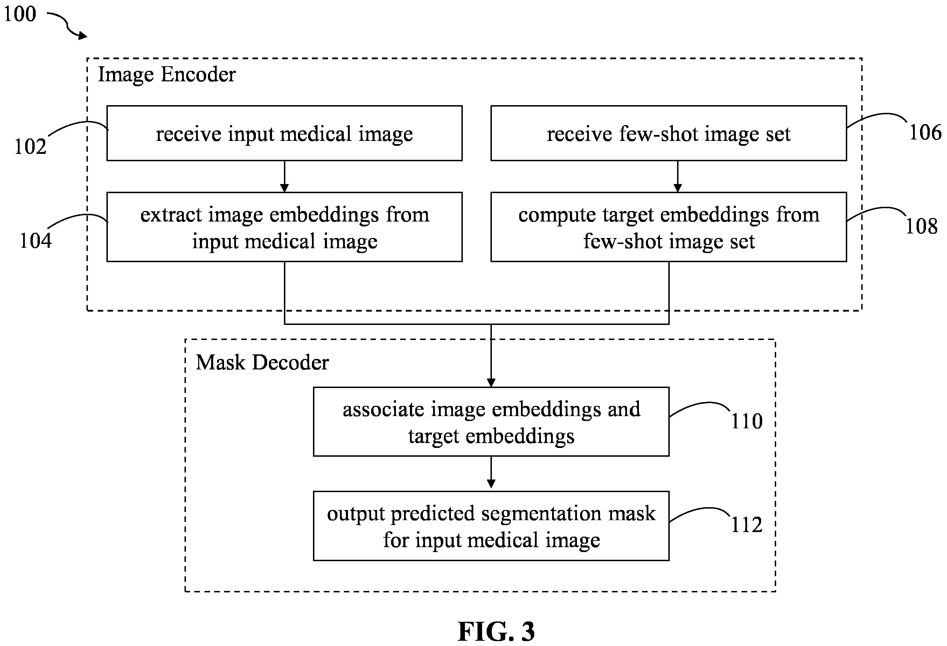

Figure 2 illustrates a block diagram of an example system architecture configured to implement the capabilities described herein. Figure 3 illustrates an example flow chart of a method (100) for implementing the segmentation process.

As shown in Figure 2, the system (S) comprises an input medical image (MI), a few-shot image set (FIS) comprised of multiple few-shot images (FI) with labels (L). The system (S) further includes an image encoder (ENC) and a mask decoder (DEC). The mask decoder (DEC) comprises a 2-way transformer (T) and an MLP (multilayer perceptron) or artificial neural network. The system (S) may comprise additional components, features, or capabilities, as understood from the detailed description and figures, such as those features or components shown in Figure 4. The image encoder (ENC) is configured to perform concatenation of information, such as using channel-wise concatenation. The mask decoder (DEC) is configured to perform dot-product functions, upsampling, downsampling, and the like. The mask decoder (DEC) may include any number of MI,Ps, such as the MLP associated with the 2-way transformer (T) as well as other MLPs for processing tokens or queries.

With reference to both Figures 2 and 3, the system (S) is configured to segment the input medical image (MI). At step 102, the image encoder (ENC) receives the input medical image (MI). At step 104, the image encoder (ENC) extracts image embeddings (IE) from the input medical image (MI). At step 106, the image encoder (ENC) receives the set of few-shot images (FIS). At step 108, the image encoder (ENC) computes target embeddings (TE) from the set of few-shot images. At step 110, the mask decoder (DEC) receives the image embeddings (IE) and the target embeddings (TE) as an input and associates the image embeddings (IE) with the target embeddings (TE) (or vice versa), optionally using the 2-way transformer (T) and the MLP. As an example, the target embeddings may be mapped to the target embeddings (or vice versa) for realizing an association therebetween. At step 112, the mask decoder (DEC) outputs a predicted segmentation or segmentation mask (SM) for the input medical image. The order of any of these steps may be performed in sequence or in parallel (simultaneously). For example, the image encoder (ENC) may receive the input medical image (MI) 102 after computing the target embeddings (TE) at step 108. Additional optional steps of the method 100 may be understood from the detailed description and figures.

The few-shot fine-tuning system and method (S, 100) is proposed for adapting SAM to segment anatomical structures from medical images (MI). Instead of relying on user-provided prompts, the proposed technique utilizes the image encoder (ENC) to extract target embeddings (TE) from the set of few-shot images (FIS) that are labeled (L) for the specific segmentation task. The labeling can occur offline or online and can be performed manually or using an automated or semi-automated approach. Labeling can include pixel labeling, voxel labeling, color labeling, intensity labeling, and/or labeling what the image/object relates to.

Given a few-shot set (FIS), $D_L = (x_i, y_i)^{NL}$ $i = 1$, where $N_L$ is the number of labeled images in $DL$, $x_i$ denotes i-th image, and $y_i$ denotes the corresponding segmentation ground truth. Both $x_i$ and $y_i$ are 2D images ($x_i, y_i \in R^{W \times H}$) with spatial size W × H. The image encoder (ENC) is run on each image (FI) to obtain image embeddings (IE) $z_i \in R^{256 \times W' \times H'}$. According to its vision transformer architecture in the image encoder (ENC), these image embeddings (IE) are at a 16× downsampled resolution (W = W/16, H' = H/16).

To align the resolution of the embeddings with the segmentation ground truth, the corresponding ground truth $y_i$ to $\hat{}$, $\hat{y} \in RW' \times H'$ is downsampled. For each anatomical label $l$, the target embedding$\hat{}$ $\in 256$ is computed by averaging the embedding vectors only within the downsampled mask corresponding to label $l$, applying the formula $\hat{} = \sum [(\hat{} = * ]/\sum (\hat{} = $, where the summation iterative across all spatial locations in $\hat{y}$, ($\hat{} = 1$) is the binary ground truth for label $l$, and $*$ denotes element-wise multiplication. Finally, all few-shot target embeddings (TE) for the set (FIS), $D_L$ are in $R^{NL \times C \times 256}$, where C is the number of labels.

Figure 4 further illustrates an example system architecture and methodology for fine-tuning SAM. The mask decoder (DEC) is shown at (b). Illustrated at (d) is the proposed prompting method based on few-shot target embeddings (TE) derived from the set (FIS) of labeled images (FI) at (c). At (a), two-way transformer (T) layers enable both image embeddings (IE) and target embeddings (TE) to attend to each other's information. To maintain clarity, the process of dense mask embeddings and positional encodings have been omitted. The dash lines in (b) indicate the process in the mask decoder (DEC) that are modified for few-shot fine-tuning. The portion indicated as "removed" in FIG. 4, as indicated by the box marked by the dash line is eliminated in the modified mask decoder (DEC) as the system and method (S, 100) does not use user prompt embeddings.

Few-shot target embeddings (TE) are concatenated with query tokens as one part of the input to the mask decoder (DEC) (modified to take few-shot embeddings as the input instead of encoded user prompts). The other input is the image embeddings (IE) (refer to Figure 4 at (a)). The mask decoder (DEC) is modified to accept few-shot target embeddings (TE) (as indicated by the dashed lines in Figure 4 (b)) rather than user-defined prompts (as shown by the box with a dashed line in the upper right corner of Figure 4 (a)). The number of output tokens to fetch from the two-way transformer (T) layers was changed to two (versus three in the original SAM's mask decoder), which is also the number of input tokens to the MLP (multilayer perceptron) or artificial neural network. The use of query tokens has the same intuition as that in the original transformer. In the adaptation of the system and method (S, 100), for each label, two masks (foreground and background) are queried using two tokens to represent one versus the rest pixel-wise classification schema. The mask decoder (DEC) queries three masks for each prompt. At each layer, both the few-shot target embeddings (TE) and the image embeddings (IE) attend to each other using a cross-attention mechanism. This enables the model to capture the correlations between the few-shot target embeddings (TE) and the image embeddings (IE) in the embedding space. After the first layer, the few-shot embeddings with tokens are also self-attended. This self-attention mechanism helps refine the representation of the few-shot embeddings and incorporate relevant information across embeddings in the few-shot set.

The image embeddings (IE) enriched from the two-way transformer (T) layers are upsampled and reshaped to a lower dimension. This reduces the dimensions of the image embeddings (IE) from $R^{256}$ to $R^{32}$, enabling more efficient computation for resolution reconstruction. Accordingly, the few-shot target embeddings (TE) and tokens are reshaped into the same reduced dimension $(R^{32})$, allowing for dot-product operations with the upsampled image embeddings (IE). The final segmentation prediction (SM) for each anatomical label from the modified mask decoder (DEC) has two channels (foreground and background) after spatially resizing into the original resolution (1024 $\times$ 1024).

2.1.4. Rationale Behind Few-Shot Querying

The mask decoder (DEC) design aims to retrieve relevant information from the image embeddings (IE) (values) using keys that are partially represented by positional encodings. The process involves generating queries based on the positional encodings derived from user-provided location information, such as points or bounding boxes. These positional encodings (queries) are then matched with the positional encodings (keys) stored within the image embeddings (IE). By doing so, the regions within the image embeddings (IE) that correspond to the user input can be fetched and transformed into segmentation predictions (SM). This mechanism enables SAM to effectively utilize the spatial relationships between the user provided location information and the image embeddings (IE) for accurate segmentation.

In the proposed implementation of the system and method (S, 100), the need for a prompt encoder is eliminated and instead few-shot target embeddings (TE) for segmentation are utilized. The proposed system and method (S, 100) shares a similar rationale with the concept of nearest-neighbor matching, where the labels of the target embeddings (TE) are propagated to the embeddings extracted from a test image. Rather than explicitly designing a nearest neighbor matching label propagation schema, the proposed system and method (S, 100) leverages the power of the two-way transformer (T) layers within the mask decoder (DEC) to facilitate optimal matches between the few-shot target embeddings (TE) and the image embeddings (IE) extracted from a test image. The target embeddings (TE) act as queries, allowing the retrieval and transformation of information stored in the image embeddings (IE) generated by the image encoder (ENC) into segmentation predictions (SM). In turn, the cross-attention maps between target embeddings (TE) and image embeddings (IE) in the two-way transformer (T) layers represent the pair-wise similarity between queries and keys in the embedding space, while the distance metrics and mapping (e.g, matching) techniques to measure these similarities were learned via the fine-tuning process.

## 3. Experimental Results

To validate the effectiveness of the system and method (S, 100), the inventors conducted a comprehensive evaluation of various prompting options offered by SAM, as well as a fully supervised nnU-Net trained on all available labeled images (FI). The evaluation was conducted on six anatomical structures. The findings indicate that the system and method (S, 100) achieves anatomical structure segmentation performance comparable to SAM when using accurate bounding boxes as prompts while significantly outperforming SAM when using foreground points alone as prompts. Given the anatomical variations and pathological changes, a noticeable performance gap was measured between the system and method (S, 100) and the fully supervised nnU-Net.

To thoroughly evaluate the system and method (S, 100), extensive validation was conducted on four datasets, covering six anatomical segmentation tasks across two modalities. Furthermore, the inventors conducted a comparative analysis of different prompting options within SAM and the fully supervised nnU-Net. The results demonstrate the superior performance of the system and method (S, 100) compared to SAM employing only point prompts (-50% improvement in IoU) and performs on-par with fully supervised methods whilst reducing the requirement of labeled data by at least an order of magnitude.

### 3.1 Datasets

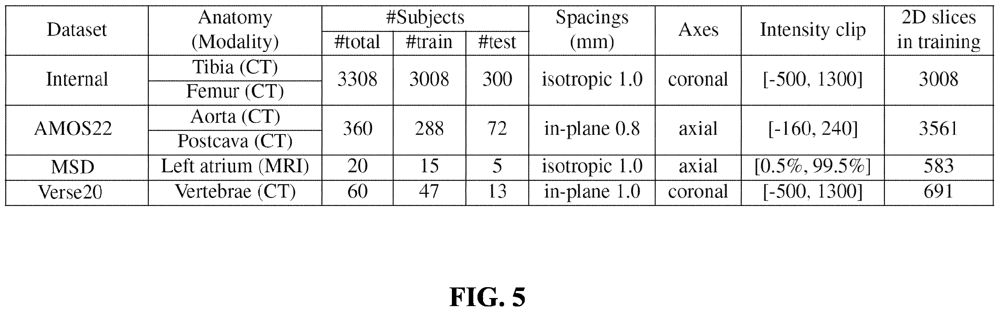

The inventors collected three publicly available datasets for anatomical segmentation on CT or MRI images. The datasets are AMOS22, MSD, and Verse20. We also collected one large-scale CT dataset internally. In total, all dataset contains 3,748 subjects, covering six anatomical structures, consisting of the tibia, femur, vertebrae, heart, aorta, and postcava. Datasets are summarized in the Table of Figure 5. Because SAM can operate on 2D images, 2D slices were sampled from 3D images for training and testing. The slices were sampled on the predefined axes after resampling scans into either fixed isotropic spacings or in a fixed in-plane resolution while keeping the original z-spacing. The sampling axes and resampling spacing can be found in the Table, as well as the intensity clipping range for preprocessing images. For simplicity, the instance-segmentation problem was avoided in the Verse20 dataset, e.g., all vertebrae bodies in the Verse20 dataset are considered one anatomical label.

The Table of Figure 5 shows data collection and processing parameters across six different anatomies on four different data sources. Each set's total number of subjects and splits are listed, including the number of 2D slices used in training. After resampling 3D images into fixed isotropic or in-plane resolutions, the 2D slices were extracted on the sampling axes. Clipping ranges are given for rescaling CT intensity values. For MRI scans, percentiles are used to exclude outliers. Although 2D slices have been described, the techniques described herein can be utilized additionally or alternatively with 3D images or datasets.

### 3.2 Methods Comparison

Three methods are compared: SAM (using point or box prompts), nnU-Net [13], and the proposed few-shot finetuning system and method (S, 100). Points and bounding boxes were extracted from the segmentation ground truth to mimic the user providing accurate points or boxes for prompting SAM. Note that this represents an idealized setting, where ground truth is leveraged to generate comprehensive prompts. For each anatomical label, a connected component analysis was first performed. Then, for each connected component, a single point was computed within the component mask, using the coordinate where the value in the distance map function is the highest. The distance map function ($DMF_x$) for a given location $x$ to the segmentation ground truth Q is computed as the follows:

$$\mathrm{DMF}_x = \begin{cases} inf & - & \text{if} & \in \\ 0 \end{cases}$$

where $\|x - d\Omega\|_2$ is the Euclidean distances between voxels coordinates x and coordinates in the ground truth object boundary set $d\Omega$. The bounding box for each component is derived from the segmentation ground truth as the top left and bottom right corners. Given an anatomy in 2D cross-section view with c connected component, the final point prompts are a sequence of coordinates $c \times 2$ combined with c-dimensional binary point labels (one if present in foreground, otherwise zero). The box prompts are $c \times 2 \times 2$. For the Verse20 dataset, there are on average six connected components (vertebrae instances) on each 2D image. In such cases, manual prompting may be infeasible for practical usage. To showcase SAM's zero shot capability, SAM (using point or box prompts) is only executed on images on the test set without retraining or fine-tuning.

The nnU-Net was trained using all 2D slices from the training split. Training hyper-parameters were tuned for each task separately using a validation set with 10% of images within the training set.

In the proposed few-shot fine-tuning system and method (S, 100), a fine-tuning was performed on the modified mask decoder (DEC) using few-shot subsets created with varying sizes, specifically 5, 20, and 50 examples from the training set. During fine-tuning, the modified mask decoder (DEC) is trained using the few-shot subset, while the fully supervised nnU-Net is trained on all available training examples. The images (FI) in the few-shot subset (FIS) are used to extract few-shot target embeddings (TE) using the image encoder (ENC). Once extracted, these few-shot target embeddings (TE) can be cached as part of model storage, enabling them to be used as prompts during test time. This caching mechanism also makes subsequent iterations of fine-tuning efficient.

### 3.3 . Metrics

The intersection over union (IoU) and average symmetric surface distance (ASSD) were reported as the metrics for evaluating the segmentation performance. IoU metrics were computed using the resampled spacings as shown in the Table of Figure 5. ASSD metrics were reported in milli-meters.

### 3.4 Experiment Details

The model parameters were optimized using the Adam optimizer with an initial learning rate of $10^{-4}$ and decay rates $\beta 1$ set to 0.9 and $\beta 2$ set to 0.99. The network parameters were initialized using He initialization. The nnU-Net method was trained for a maximum of 200 epochs for all tasks, with training stopping when the metrics on the validation set did not show improvement for ten epochs. Data augmentations were randomly applied during training, including intensity scaling and shifting, contrast stretching, Gaussian additive noise, spatial flipping, and resizing after cropping. For fine-tuning the modified mask decoder (DEC), a maximum of 50, 80, and 100 iterations were performed when the few-shot set consisted of 5, 20, and 50 labeled images (FI), respectively. The images (FI) in the few-shot set (FIS) were selected to best represent the target anatomy's appearance. All experiments were conducted on a machine with 4 NVIDIA Tesla K80 GPUs, 24 CPU cores, and 224 GB RAM. The fine-tuning experiments were completed within three hours using the cache mechanism.

### 3.5 Results

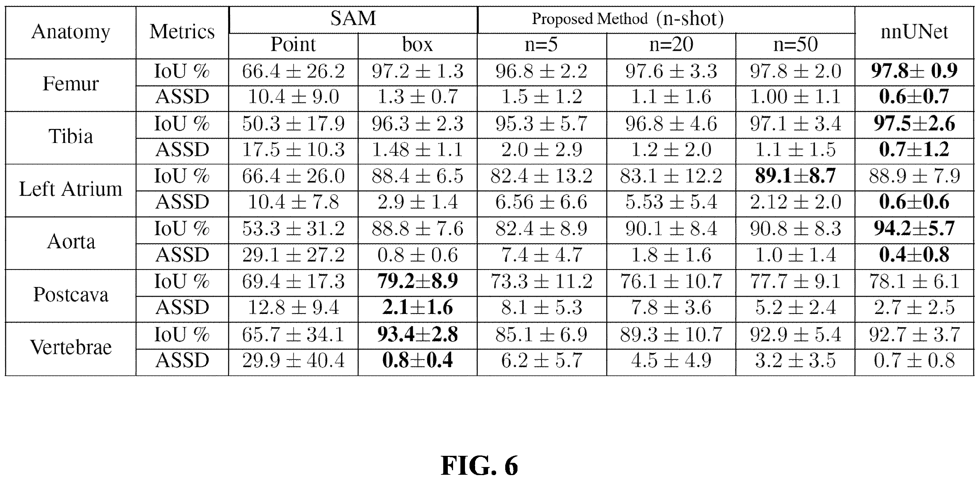

Figure 6 shows a table demonstrating quantitative results of anatomical segmentation methods on various anatomies. Three set of methods in comparison: SAM (point or boxes as prompts), the proposed few-shot system and method (S, 100) trained with 5, 20, and 50 labeled images (FI), and the fully supervised nnUNet trained with full data. Best results are in bold. ASSD: average symmetric surface distance, IoU: intersection over union.

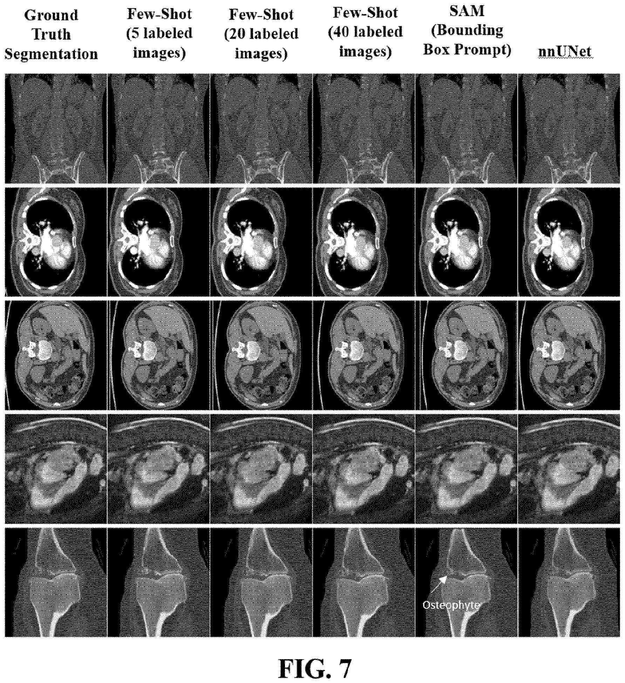

Figure 7 shows qualitative results of the segmentation methods in comparison. The first column represents the ground truth segmentations, where all anatomies are visualized in red, except for the femur, which is visualized in green to differentiate it from the tibia. The subsequent columns depict the results of different segmentation methods: SAM with bounding box prompt (5th column), the fully supervised nnUNet (6th column), and the proposed few-shot finetuning system and method (S, 100) with 5, 20, and 50 labeled images (FI) (2nd-4th columns). Each row corresponds to a different case.

The Table of Figure 6 shows that SAM, with only point prompts, exhibits suboptimal performance, with Intersection over Union (IoU) below 70% and Average Symmetric Surface Distance (ASSD) exceeding 10 mm on all tasks. This is primarily due to the inherent ambiguity in the predictions, as demonstrated in Figure 1. SAM utilizing bounding boxes as prompts demonstrates remarkable zero-shot capabilities, achieving the highest scores in the postcava and vertebrae among all methods. Although SAM with accurate bounding box prompts shows solid performance, qualitative results (Figure 7, 5th column, 5th row) show that SAM image embeddings, in general, do not suffice to represent pathological changes that do not belonging to the common anatomy. In the cases of knee joint segmentation, osteophytes (attached to the tibia colored in red) are partially missed (labeled as "osteophyte"). As the system and method (S, 100) leaves SAM's image encoder (ENC) intact, this segmentation error shows that the image embeddings extracted by the pre-trained image encoder fail to describe osteophytes. Segmenting pathological changes itself is a challenging task as these changes may be underrepresented in the data collection, as the same under-segmentation was observed in nnU-Net's results (Figure 7, 6th column, 5th row). Interestingly, the system and method (S, 100) produces even better results than SAM with box prompts on segmenting the femur, tibia, left atrium, and aorta when using 50 labeled images, showing the ability of the system and method (S, 100) to segment difficult anatomical structures when sufficient images are labeled for fine-tuning. Significantly, the required number of labeled images are an order of magnitude less than to achieve similar results with the fully supervised nnU-Net approach, especially for knee segmentation.

However, the fine-tuning method using only five labeled images (FI) on Verse20 produces sub-optimal results, with IoU at 85.1 and ASSD at 6.2mm compared with box-prompting SAM at IoU 93.4 and ASSD 0.8mm. The drop in performance for segmenting vertebrae with five-shot fine-tuning is attributed to missing coverage of all vertebrae in 2D coronal views. Most 2D views cover thoracic and lumbar vertebra, while cervical and sacrum spines are under-presented in sampled 2D training slices. Therefore, including all vertebrae with only five 2D coronal slices is challenging. For segmenting tubular structures such as the left atrium, aorta, and postcava, the few-shot method with five images also faced the challenges given these structures may look very different in 2D cross-section views, and such variations cannot be sufficiently summarized with only five images. By adding more labeled images (FI) to the few-shot set (FIS), the segmentation performance can be improved substantially. Qualitative results show that the segmentation errors were mostly over-segmentation of adjacent non-target anatomies (such as ilium bone segmented in Figure 7, 1st row, 4th column not part of sacral vertebrae). Overall, the segmentation errors in the proposed approach may be caused by the SAM's image encoder not capturing sufficient anatomical semantics, especially around the boundaries of these anatomical structures. Over-segmentations mostly show that these features failed to distinguish adjacent anatomies, especially when they appear similar (e.g., left atrium versus the surrounding tissues in other parts of the heart). On the other hand, we also observe that SAM's image embeddings are powerful enough to identify unrelated regions that are far from the target anatomy, even when they are similar in appearance. In abdomen CT images, many anatomical structures have similar intensity distributions, such as between the aorta and postcava. Figure 7 shows no false positives of labeling the aorta as postcava or vice versa in the few-shot fine-tuning results.

Finally, the nnU-Net trained with all labeled images achieved the best overall segmentation performance, showing that training task-specific model still produces better segmentation results if a sufficient number of labeled images is available.

4. Discussion and Conclusion

The system and method (S, 100) adapts SAM to anatomical segmentation tasks in medical images (MI), such as CT or MRI images. The system and method (S, 100) eliminates user prompts and relies on a few labeled images (FI) for prompting. The system and method (S, 100) was compared with prompt-based SAM (points and boxes) and fully supervised nnU-Net methods. Significantly, accurate ground truth segmentations are leveraged to generate the bounding box prompts for SAM, representing highly idealized prompts that are unlikely to be generated for every sample without going through significant labeling effort. Meanwhile, the inventors observe that prompting can be expensive and sometimes infeasible for medical anatomical structure segmentation, especially when dealing with large sparsely distributed entities, such as airways and vessels. Remarkably, the system and method (S, 100) with five labeled images (FI) achieves comparable results to SAM with (idealized) bounding box prompts (required for every image) for femur and tibia segmentation, highlighting the potential for the system and method (S, 100) to reduce the amount of labeling effort required and still maintain accurate segmentation of anatomical structures.

Similarly, there is only a single point difference between five-shot fine-tuning method and the fully supervised nnU-Net method for femur and tibia segmentation, trained on 3000 images. The reduced requirement for labeled images while maintaining good performance is a key strength of our method. Additionally, the fine-tuning process is efficient by caching computed image embeddings (IE), allowing for reuse in repeated runs. Experimental results demonstrate the effectiveness of the system and method (S, 100) in segmenting various challenging anatomies in CT or MRI images, even possible with only five labeled images for training. Finally, we believe that the utility of our few-shot SAM can reach beyond medical image segmentation, potentially can be used also as a general way of providing prompts for token-query-based object detection and classification frameworks.

Several configurations have been discussed in the foregoing description. However, the configurations discussed herein are not intended to be exhaustive or limit the invention to any particular form. The terminology which has been used is intended to be in the nature of words of description rather than of limitation. Many modifications and variations are possible in light of the above teachings and the invention may be practiced otherwise than as specifically described.

It will be further appreciated that the terms "include," "includes," and "including" have the same meaning as the terms "comprise," "comprises," and "comprising." Moreover, it will be appreciated that terms such as "first," "second," "third," and the like are used herein to differentiate certain structural features and components for the non-limiting, illustrative purposes of clarity and consistency

**Claims**

1. A system (S) configured to segment an input medical image (MI), the system (S) comprising:
   an image encoder (ENC) configured to:

   > receive the input medical image (MI);
   > extract image embeddings (IE) from the input medical image (MI);
   > receive a set of few-shot images (FIS, FI); and compute target embeddings (TE) from the set of few-shot images (FIS, FI); and a mask decoder (DEC) configured to:

   >> receive the image embeddings (IE) and the target embeddings (TE) as an input; and associate the image embeddings (IE) and the target embeddings (TE) to output a predicted segmentation mask (SM) for the input medical image (MI).

2. The system (S) of claim 1, wherein each image of the set of few-shot images (FIS, FI) comprises a label (L) for a specific anatomical segmentation task.

3. The system (S) of claim 2, wherein the image encoder (ENC) is configured to compute each target embedding based on, at least in part, the label (L).

4. The system (S) of any one of claim 2 to 3, wherein the mask decoder (DEC) is configured to propagate the label (L) from the target embeddings (TE) to the image embeddings (IE).

5. The system (S) of any preceding claim, wherein;

to associate the image embeddings (IE) and the target embeddings (TE), the mask decoder (DEC) is configured to utilize the target embeddings (TE) as prompts to query anatomical objects captured in the image embeddings- (IE), and optionally,

in response to utilization of the target embeddings (TE) as prompts to query anatomical objects captured in the image embeddings (IE), the mask decoder (DEC) is configured to retrieve and transform information stored in the image embeddings (IE) to output the predicted segmentation mask (SM) for the input medical image (MI).

6. The system (S) of claim 5, wherein the mask decoder (DEC) utilizes the target embeddings (TE) as prompts to query anatomical objects captured in the image embeddings (IE) by being configured to query a foreground mask and a background mask.

7. The system (S) of any preceding claim, wherein the image encoder (ENC) is configured concatenate the target embeddings (TE) with query tokens prior to the target embeddings (TE) being input to the mask decoder (DEC).

8. The system (S) of any preceding claim, wherein the mask decoder (DEC) comprises a first artificial neural network that is trained using the target embeddings (TE) and image embeddings (IE).

9. The system (S) of any preceding claim, wherein:

the mask decoder (DEC) comprises a two-way transformer (T) configured to receive the image embeddings (IE) and the target embeddings (TE) as the input and associate the image embeddings (IE) and the target embeddings- (TE), and optionally,

the two-way transformer (T) comprises a second artificial neural network and is configured to utilize cross-attention mapping and the second artificial neural network to associate the image embeddings (IE) and the target embeddings (TE).

10. The system (S) of any preceding claim, wherein the predicted segmentation mask (SM) for the input medical image (MI) comprises a foreground mask and a background mask.

11. The system (S) of any preceding claim, wherein

the set of few-shot images (FIS, FI) comprises: 50 or less images (FI), 20 or less images (FI), or 5 or less images (FI); and the input medical image (MI) is a 2D CT or MRI image.

12. The system (S) of any preceding claim, wherein configured to automatically segment the input medical image (MI), and wherein:

the image encoder (ENC) is configured to: automatically extract the image embeddings (IE) from the input medical image (MI); and automatically compute the target embeddings (TE) from the set of few-shot images (FIS, FI); and the mask decoder (DEC) is configured to automatically associate the image embeddings (IE) and the target embeddings (TE) to automatically output the predicted segmentation mask (SM) for the input medical image (MI).

13. The system (S) of any preceding claim, wherein the mask decoder (DEC) is operable absent any input from a prompt encoder or user prompt.

14. A non-transitory computer-readable medium comprising instructions, which when executed by one or more processors, are configured to segment an input medical image (MI) by being configured to:

receive the input medical image (MI) with an image encoder (ENC);
extract image embeddings (IE) from the input medical image (MI) with the image encoder (ENC);
receive a set of few-shot images (FIS, FI) with the image encoder (ENC);
compute target embeddings (TE) from the set of few-shot images (FIS, FI) with the image encoder (ENC);
input the image embeddings (IE) and the target embeddings (TE) to a mask decoder (DEC); and

associate the image embeddings (IE) and the target embeddings (TE), with the mask decoder (DEC), to output a predicted segmentation mask (SM) for the input medical image (MI).

15. A computer-implemented method (100) for segmenting an input medical image (MI), the computer-implemented method comprising:

receiving (102) the input medical image (MI) with an image encoder (ENC);
extracting (104) image embeddings (IE) from the input medical image (MI) with the image encoder (ENC);
receiving (106) a set of few-shot images (FIS, FI) with the image encoder (ENC);
computing (108) target embeddings (TE) from the set of few-shot images (FIS, FI) with the image encoder (ENC);
inputting the image embeddings (IE) and the target embeddings (TE) to a mask decoder (DEC); and
associating (110) the image embeddings (IE) and the target embeddings (TE), with the mask decoder (DEC), for outputting (112) a predicted segmentation mask (SM) for the input medical image (MI).

FIG. 1

**FIG. 2**

**FIG. 3**

FIG. 4

| Dataset | Anatomy (Modality) | #Subjects | | | Spacings (mm) | Axes | Intensity clip | 2D slices in training |
| --- | --- | --- | --- | --- | --- | --- | --- | --- |
| | | #total | #train | #test | | | | |
| Internal | Tibia (CT) | 3308 | 3008 | 300 | isotropic 1.0 | coronal | [-500, 1300] | 3008 |
| | Femur (CT) | | | | | | | |
| AMOS22 | Aorta (CT) | 360 | 288 | 72 | in-plane 0.8 | axial | [-160, 240] | 3561 |
| | Postcava (CT) | | | | | | | |
| MSD | Left atrium (MRI) | 20 | 15 | 5 | isotropic 1.0 | axial | [0.5%, 99.5%] | 583 |
| Verse20 | Vertebrae (CT) | 60 | 47 | 13 | in-plane 1.0 | coronal | [-500, 1300] | 691 |

**FIG. 5**

| Anatomy | Metrics | SAM | | Proposed Method (n-shot) | | | nnUNet |
|---|---|---|---|---|---|---|---|
| | | Point | box | n=5 | n=20 | n=50 | |
| Femur | IoU % | 66.4 ± 26.2 | 97.2 ± 1.3 | 96.8 ± 2.2 | 97.6 ± 3.3 | 97.8 ± 2.0 | **97.8± 0.9** |
| | ASSD | 10.4 ± 9.0 | 1.3 ± 0.7 | 1.5 ± 1.2 | 1.1 ± 1.6 | 1.00 ± 1.1 | **0.6±0.7** |
| Tibia | IoU % | 50.3 ± 17.9 | 96.3 ± 2.3 | 95.3 ± 5.7 | 96.8 ± 4.6 | 97.1 ± 3.4 | **97.5±2.6** |
| | ASSD | 17.5 ± 10.3 | 1.48 ± 1.1 | 2.0 ± 2.9 | 1.2 ± 2.0 | 1.1 ± 1.5 | **0.7±1.2** |
| Left Atrium | IoU % | 66.4 ± 26.0 | 88.4 ± 6.5 | 82.4 ± 13.2 | 83.1 ± 12.2 | **89.1±8.7** | 88.9 ± 7.9 |
| | ASSD | 10.4 ± 7.8 | 2.9 ± 1.4 | 6.56 ± 6.6 | 5.53 ± 5.4 | 2.12 ± 2.0 | **0.6±0.6** |
| Aorta | IoU % | 53.3 ± 31.2 | 88.8 ± 7.6 | 82.4 ± 8.9 | 90.1 ± 8.4 | 90.8 ± 8.3 | **94.2±5.7** |
| | ASSD | 29.1 ± 27.2 | 0.8 ± 0.6 | 7.4 ± 4.7 | 1.8 ± 1.6 | 1.0 ± 1.4 | **0.4±0.8** |
| Postcava | IoU % | 69.4 ± 17.3 | **79.2±8.9** | 73.3 ± 11.2 | 76.1 ± 10.7 | 77.7 ± 9.1 | 78.1 ± 6.1 |
| | ASSD | 12.8 ± 9.4 | **2.1±1.6** | 8.1 ± 5.3 | 7.8 ± 3.6 | 5.2 ± 2.4 | 2.7 ± 2.5 |
| Vertebrae | IoU % | 65.7 ± 34.1 | **93.4±2.8** | 85.1 ± 6.9 | 89.3 ± 10.7 | 92.9 ± 5.4 | 92.7 ± 3.7 |
| | ASSD | 29.9 ± 40.4 | **0.8±0.4** | 6.2 ± 5.7 | 4.5 ± 4.9 | 3.2 ± 3.5 | 0.7 ± 0.8 |

**FIG. 6**

FIG. 7

Europäisches
Patentamt

European
Patent Office

Office européen
des brevets

# EUROPEAN SEARCH REPORT

**Application Number**

EP 24 19 8593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YICHI ZHANG ET AL: "Towards Segment Anything Model (SAM) for Medical Image Segmentation: A Survey", ARXIV.ORG, CORNELL UNIVERSITY LIBRARY, 201 OLIN LIBRARY CORNELL UNIVERSITY ITHACA, NY 14853, 11 August 2023 (2023-08-11), XP091581124, | 1,5,7,9, 12-15 | INV. G06T7/11 |
| Y | * title * * figure 2 * * page 2, right-hand column, paragraph 3 * ----- | 2-4,6,8, 10,11 | |
| Y | YUHAO HUANG ET AL: "Segment Anything Model for Medical Images?", ARXIV.ORG, CORNELL UNIVERSITY LIBRARY, 201 OLIN LIBRARY CORNELL UNIVERSITY ITHACA, NY 14853, 1 May 2023 (2023-05-01), XP091498082, * figure 5 * * page 7, left-hand column, lines 10-11 * * page 1, right-hand column, lines 29-32 * * page 3, left-hand column, last paragraph * * page 4, left-hand column, lines 2-6 * ----- | 2-4,6,8, 10,11 | |

**TECHNICAL FIELDS SEARCHED (IPC)**

G06T

The present search report has been drawn up for all claims

| Place of search | Date of completion of the search | Examiner |
|---|---|---|
| Munich | 22 January 2025 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63536730